# FASCICULE DE BREVET EUROPEEN

(11) **EP 0 921 040 B1**
(45) Date de publication et mention de la délivrance du brevet: **11.09.2002**
(21) Numéro de dépôt: 98402999.1
(22) Date de dépôt: 30.11.1998
(51) Int. Cl.: B60R 13/04

(54) **Système de cache d'une ouverture donnant accès à la fixation pour une barre de toit de véhicule**
Abdecksystem für eine zugängliche Öffnung zum Befestigen eines Kraftfahrzeug-Dachträgerholms
Cover system for an accessible opening for fixing a motor vehicle rack bar

(30) Priorité: 05.12.1997 FR 9715421
(43) Date de publication de la demande: 09.06.1999
(73) Titulaire: AUTOMOBILES PEUGEOT, 75116 Paris (FR); AUTOMOBILES CITROEN, 92200 Neuilly-sur-Seine (FR)
(72) Inventeur: Le Dall, Christophe, 92360 Meudon-La-Forêt (FR)
(74) Mandataire: Bentz, Jean-Paul

(56) Documents cités:
- EP-A- 0 300 528
- DE-A- 3 743 941
- US-A- 2 956 430

## Description

La présente invention concerne le domaine de la fixation d'une barre porte-bagages sur le toit d'un véhicule et plus particulièrement, un système de cache d'une ouverture donnant accès à une fixation pour une telle barre.

De façon connue, le toit d'un véhicule comporte, sur chacun de ses bords longitudinaux, un enjoliveur qui est fixé de manière appropriée.

Cet enjoliveur sert à masquer au moins un dispositif de fixation de barre de toit qui est prévu dans le toit du véhicule.

Ainsi, chaque enjoliveur comporte au moins une ouverture qui donne accès au dispositif de fixation.

Sur l'enjoliveur, est prévu un système de cache pour cette ouverture qui comprend une trappe montée mobile sur l'enjoliveur, entre une position fermée dans laquelle elle recouvre ladite ouverture et une position ouverte dans laquelle l'accès à cette ouverture est libre.

On connaît déjà des systèmes de cache prévus sur un enjoliveur de toit. Ces systèmes comportent soit une trappe qui peut coulisser longitudinalement sur l'enjoliveur, soit une trappe qui peut tourner par rapport à l'enjoliveur, selon l'axe longitudinal de ce dernier.

Un système de cache d'une ouverture ayant les caractéristiques du préambule de la revendication 1 est décrit dans le document DE-A-37 43 941. Toutefois, ces systèmes présentent des inconvénients, notamment celui de nécessiter un nombre de pièces important et ils sont relativement encombrants.

L'invention a pour objet de pallier ces inconvénients en proposant un système de cache d'une ouverture donnant accès à un dispositif de fixation pour une barre de toit de véhicule, du type comprenant une trappe montée mobile sur un enjoliveur du toit comportant ladite ouverture, pour prendre une position de libération ou de fermeture de ladite ouverture, caractérisé en ce que ladite trappe est montée pivotante autour d'un axe sensiblement orthogonal audit enjoliveur et audit toit.

Ladite trappe est pourvue d'un pivot comportant un épaulement ou analogue, coopérant avec des moyens élastiques fixes à la fois en rotation et en translation, pour plaquer ladite trappe contre ledit enjoliveur.

Dans une forme de réalisation de l'invention, les moyens élastiques sont constitués par un ressort présentant la forme d'une fourche arquée et élastiquement déformable, dont l'extrémité des branches s'applique par pression sous l'enjoliveur et dont la portion reliant lesdites branches s'enclenche sous ledit enjoliveur.

Selon une caractéristique de l'invention, ledit enjoliveur comporte également un orifice pour le passage du pivot de ladite trappe et une encoche pour retenir ladite portion reliant lesdites branches.

Dans une première forme de réalisation, la trappe présente une forme convexe s'adaptant sur un enjoliveur présentant une convexité correspondante.

Dans une deuxième forme de réalisation, la trappe présente une forme concave s'adaptant sur un enjoliveur présentant une concavité correspondante.

De façon avantageuse, la trappe est logée dans une forme en creux ménagée dans l'enjoliveur.

De façon préférée, la trappe comporte des moyens d'actionnement manuel, pour la faire pivoter entre les positions de libération et de fermeture de ladite ouverture.

Dans une forme de réalisation, ces moyens consistent en une rainure pratiquée sur la face extérieure de ladite trappe.

L'invention sera mieux comprise et d'autres buts, caractéristiques, détails et avantages de celle-ci apparaîtront plus clairement au cours de la description suivante, qui est faite en référence aux dessins schématiques annexés donnés à titre d'exemple et qui illustrent des modes de réalisation de l'invention et dans lesquels :

La figure 1 est une vue partielle de dessus d'un enjoliveur muni d'un système de cache selon l'invention, la trappe étant en position de fermeture.

La figure 2 est une vue similaire à la figure 1, dans laquelle la trappe est en position ouverte.

La figure 3 est une vue en coupe selon III-III de la figure 1.

La figure 4 est une vue éclatée des éléments constitutifs d'un système de cache selon l'invention et d'un enjoliveur.

La figure 5 est une vue en coupe selon V-V d'une première variante de réalisation d'une trappe d'un système de cache selon l'invention.

La figure 6 est une vue en coupe selon V-V d'une deuxième variante de réalisation d'une telle trappe.

La figure 7 est une vue partielle en perspective d'un système de cache selon l'invention, monté sur un enjoliveur et en position fermée.

La figure 8 représente une variante de réalisation de la figure 7, dans la même position fermée.

Les éléments communs aux différentes figures seront désignés par les mêmes repères.

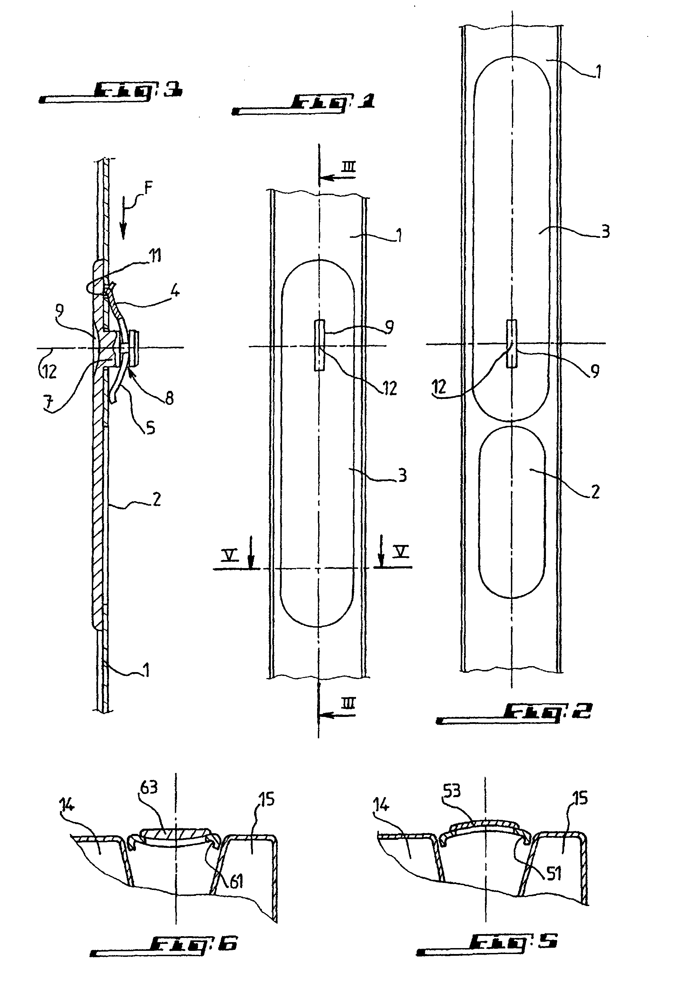

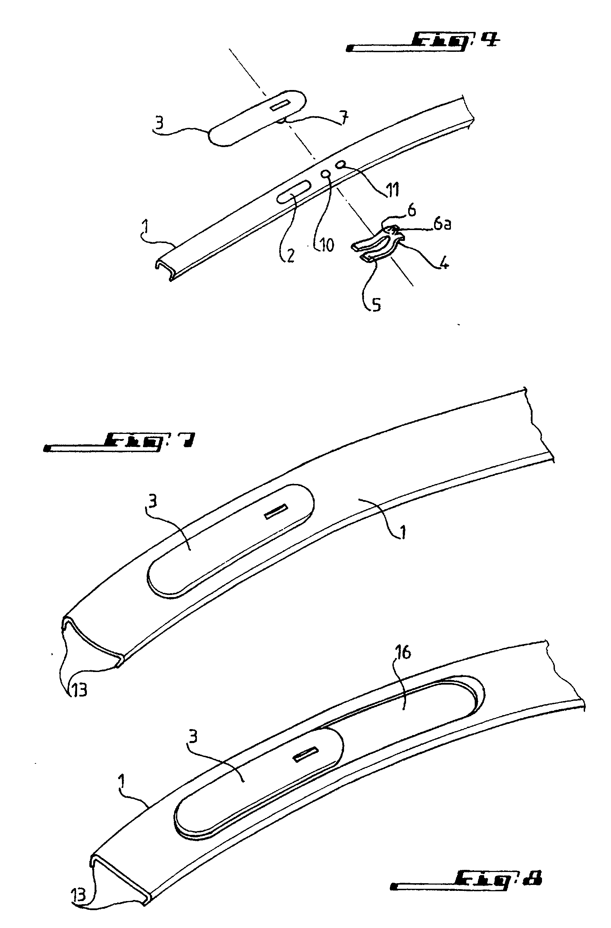

En référence aux figures 1 et 2, l'enjoliveur de toit est désigné par le repère 1.

De façon classique, il est disposé sur l'un des bords longitudinaux du toit d'une voiture. C'est un profilé métallique qui est cintré en fonction de la forme du toit du véhicule. Il a pour fonction de recouvrir au moins un dispositif de fixation (non représenté) pour barre de toit, fixé sur le toit.

Sur cet enjoliveur, est monté un système de cache de l'ouverture 2 prévue sur l'enjoliveur 1 pour donner accès à ce dispositif de fixation.

Le système de cache selon l'invention comporte une trappe 3 présentant une forme allongée, sensiblement plane, dont les dimensions sont inférieures à celles de l'enjoliveur.

La trappe 3 est représentée en position fermée sur la figure 1, position dans laquelle elle bloque l'accès à l'ouverture 2, et en position ouverte ou de libération sur la figure 2, position dans laquelle la trappe permet l'accès à l'ouverture 2. Comme cela sera expliqué dans la suite de la description, la trappe 3 est mobile en rotation entre ces deux positions.

L'enjoliveur 1 et le système de cache selon l'invention vont maintenant être décrits plus précisément en référence aux figures 3 et 4.

La figure 4 montre l'enjoliveur 1 ainsi que les deux pièces constitutives du système de cache : la trappe 3 et des moyens élastiques 4.

Dans l'exemple illustré sur les figures, ces moyens élastiques sont constitués par un ressort présentant la forme d'une fourche arquée, élastiquement déformable. De façon plus précise, il comporte deux branches 5 reliées entre elles par une portion portant la référence 6. Elle se prolonge, de préférence, par un ergot 6a. D'autres formes de réalisation des moyens élastiques pourraient cependant être envisagées.

La trappe 3 comporte un pivot 7 qui s'étend sensiblement orthogonalement au corps de la trappe et qui est, de préférence, excentré. Le pivot comporte un épaulement 8.

Du côté opposé au pivot 7, la trappe 3 comporte une rainure 9 qui permet l'actionnement manuel de la trappe, comme cela sera expliqué dans la suite de la description.

Par ailleurs, l'enjoliveur 1 comporte l'ouverture 2 qui donne accès au dispositif de fixation de barre de toit et également un orifice 10 pour le passage, à travers l'enjoliveur, du pivot 7 de la trappe, ainsi qu'une encoche 11 destinée aux moyens élastiques 4 et plus particulièrement à l'ergot 6a.

Le montage sur l'enjoliveur du système de cache selon l'invention s'effectue de la façon suivante.

La trappe 3 est mise en place sur l'enjoliveur en introduisant le pivot 7 dans l'orifice 10. La trappe 3 est ainsi mobile en rotation par rapport à l'enjoliveur 1, autour de l'axe 12 sensiblement orthogonal à l'enjoliveur.

On place ensuite la trappe 3 en position fermée ou de libération, puis on fait coulisser selon la flèche F le ressort 4 dans l'épaulement 8 qui est sous l'enjoliveur 1, jusqu'à ce que la portion 6 du ressort vienne s'enclencher dans l'encoche 11 prévue dans l'enjoliveur 1, l'extrémité des branches 5 s'appliquant par pression sous l'enjoliveur. C'est, de préférence, l'ergot 6a qui est retenu dans l'encoche 11. Le ressort 4 est alors bloqué en translation et le système de cache selon l'invention est indémontable de l'extérieur du véhicule.

La figure 7 montre la trappe 3, fixée sur l'enjoliveur 1. Cette figure illustre un exemple de profil de l'enjoliveur 1, lequel comporte des bords 13.

Ainsi, le ressort étant maintenu en rotation et en translation, il permet de plaquer la trappe 3 sur l'enjoliveur 1 dans toutes les positions.

Le fonctionnement du système de cache est le suivant, par exemple pour passer de la position fermée illustrée à la figure 1 à la position de libération illustrée à la figure 2. Le fonctionnement est bien sûr identique pour passer de cette dernière à la position fermée.

On fait tourner la trappe 3 autour de l'axe 12 par tout moyen d'actionnement manuel et par exemple, en introduisant une pièce de monnaie dans la rainure 9 qui se trouve sur la face extérieure de la trappe.

A l'amorce du mouvement de rotation, le ressort 4 réagit et la trappe 3 commence par effectuer un mouvement de translation selon l'axe 12 qui l'éloigne légèrement de l'enjoliveur 1. Ensuite, elle commence son mouvement de rotation. Lorsqu'une rotation de 180° est effectuée, la trappe se trouve dans la position ouverte ou de libération, illustrée à la figure 2, libère l'accès à l'ouverture 2 et le ressort 4 plaque alors la trappe 3 sur l'enjoliveur 1.

Le système de cache selon l'invention est de fonctionnement simple et il est également indémontable de l'extérieur du véhicule. En outre, par rapport aux systèmes de cache connus, il nécessite un nombre de pièces moins important, ces pièces étant de réalisation facile.

On se réfère maintenant aux figures 5 et 6 qui illustrent des variantes de réalisation d'une trappe d'un système de cache selon l'invention. Ces figures font apparaître la forme de la trappe.

Ces figures illustrent la position qu'occupe l'enjoliveur 51 ou 61 par rapport au toit 14 du véhicule et au côté 15 de l'habitacle.

En référence à la figure 5, la trappe 53 présente une forme convexe qui s'adapte sur un enjoliveur 51 présentant une convexité correspondante.

En référence à la figure 6, la trappe 63 présente une forme concave qui vient s'adapter dans un enjoliveur 61 présentant une concavité correspondante.

Ces deux modes de réalisation assurent l'auto-positionnement de la trappe, par rapport à l'enjoliveur, dans les positions de fermeture ou de libération de l'ouverture.

On se réfère maintenant à la figure 8 qui illustre un autre mode de réalisation permettant également l'auto-positionnement de la trappe sur l'enjoliveur.

L'enjoliveur 1 présente une forme en creux 16, dont les dimensions transversales sont légèrement supérieures à celles de la trappe et dont les dimensions longitudinales lui permettent de recevoir la trappe 3 à la fois en position ouverte et en position fermée.

Ce mode de réalisation de l'enjoliveur 1 assure l'auto-positionnement de la trappe 3 sur ce dernier, dans sa position ouverte ou fermée. Ce mode de réalisation est également avantageuse pour l'aérodynamisme, dans la mesure où la trappe est logée dans l'enjoliveur.

Les signes de référence insérés après les caractéristiques techniques figurant dans les revendications ont pour seul objet de faciliter la compréhension de ces dernières et ne sauraient en limiter la portée.

## Revendications

1. Système de cache d'une ouverture (2) donnant accès à un dispositif de fixation pour une barre de toit de véhicule, du type comprenant une trappe (3, 53, 63) montée mobile sur un enjoliveur (1) dudit toit comportant ladite ouverture (2), pour prendre une position de libération ou de fermeture de ladite ouverture, ladite trappe (3, 53, 63) étant montée pivotante autour d'un axe (12), **caractérisé en ce que** l'axe (12) est sensiblement orthogonal audit enjoliveur (1) et audit toit, et **en ce que** que la trappe (3, 53, 63) est pourvue d'un pivot (7) comportant un épaulement (8) ou analogue, coopérant avec des moyens élastiques (4) fixes à la fois en rotation et en translation, pour plaquer ladite trappe contre ledit enjoliveur.

2. Système de cache selon la revendication 1, **caractérisé en ce que** les moyens élastiques (4) sont constitués par un ressort présentant la forme d'une fourche arquée et élastiquement déformable, dont l'extrémité des branches (5) s'applique par pression sous l'enjoliveur et dont la portion (6) reliant lesdites branches s'enclenche sous ledit enjoliveur.

3. Système de cache selon l'une des revendications 1 ou 2, **caractérisé en ce que** ledit enjoliveur (1) comporte également un orifice (10) pour le passage dudit pivot (7) de la trappe et une encoche (11) pour retenir la portion (6) reliant lesdites branches (5).

4. Système de cache selon l'une des revendications 1 à 3, **caractérisé en ce que** la trappe (53) présente une forme convexe s'adaptant sur un enjoliveur (51) présentant une convexité correspondante.

5. Système de cache selon l'une des revendications 1 à 4, **caractérisé en ce que** la trappe (63) présente une forme concave, s'adaptant sur un enjoliveur présentant une concavité correspondante.

6. Système de cache selon l'une des revendications 1 à 5, **caractérisé en ce que** la trappe est logée dans une forme en creux (16) ménagée dans l'enjoliveur.

7. Système de cache selon l'une des revendications 1 à 6, **caractérisé en ce que** la trappe (3, 53, 63) comporte des moyens d'actionnement manuel pour la faire pivoter entre les positions de libération et de fermeture de ladite ouverture (2).

8. Système de cache selon la revendication 7, **caractérisé en ce que** lesdits moyens d'actionnement consistent en une rainure (9) pratiquée sur la face extérieure de ladite trappe.

## Patentansprüche

1. Abdecksystem für eine zugängliche Öffnung (2) zu einer Befestigungsvorrichtung für einen Kraftfahrzeug-Dachträgerholm von der Art, umfassend eine Klappe (3, 53, 63), die mobil auf einer Zierleiste (1) des besagten Dachs montiert ist, umfassend die besagte Öffnung (2), um eine Öffnungs- oder Schließposition der besagten Öffnung einzunehmen, wobei besagte Klappe (3, 53, 63) um eine Achse (12) schwenkend angebracht ist, **dadurch gekennzeichnet, dass** die Achse (12) deutlich orthogonal zu besagter Zierleiste (1) und zu besagtem Dach ist, und dass die Klappe (3, 53, 63) mit einem Drehbolzen (7) versehen ist, der ein Schulterstück (8) oder dergleichen umfasst, das mit gleichzeitig in Rotation und in Translation festen elastischen Mitteln (4) zusammenwirkt, um besagte Klappe gegen die besagte Zierleiste zu drücken.

2. Abdecksystem gemäß Anspruch 1, **dadurch gekennzeichnet, dass** die elastischen Mittel (4) durch eine die Form einer gebogenen Gabel aufweisende und elastisch verformbare Feder gebildet werden, deren Ende der Arme (5) durch Druck unter der Zierleiste angewendet wird und deren die besagten Arme verbindender Abschnitt (6) unter der besagten Zierleiste eingreift.

3. Abdecksystem gemäß Anspruch 1 oder 2, **dadurch gekennzeichnet, dass** die besagte Zierleiste (1) ebenfalls eine Öffnung (10) für den Durchgang des besagten Drehbolzens (7) der Klappe und eine Aussparung (11) zum Festhalten des die besagten Arme (5) verbindenden Abschnitts (6) umfasst.

4. Abdecksystem gemäß Anspruch 1 bis 3, **dadurch gekennzeichnet, dass** die Klappe (53) eine konvexe Form aufweist, die sich auf einer eine entsprechende Konkavität aufweisenden Zierleiste (51) anpasst.

5. Abdecksystem gemäß Anspruch 1 bis 4, **dadurch gekennzeichnet, dass** die Klappe (63) eine konkave Form aufweist, die sich auf einer eine entsprechende Konkavität aufweisenden Zierleiste anpasst.

6. Abdecksystem gemäß Anspruch 1 bis 5, **dadurch gekennzeichnet, dass** die Klappe in einer in der Zierleiste ausgesparten Hohlform (16) untergebracht ist.

7. Abdecksystem gemäß Anspruch 1 bis 6, **dadurch gekennzeichnet, dass** die Klappe (3, 53, 63) manuelle Betätigungsmittel umfasst, um sie zwischen den Öffnungsund Schließungspositionen der besagten Öffnung (2) schwenken zu lassen.

8. Abdecksystem gemäß Anspruch 7, **dadurch gekennzeichnet, dass** die besagten Betätigungsmittel aus einer auf der Außenseite der besagten Klappe praktizierten Rille (9) gebildet werden.

## Claims

1. Cover system (2) for an accessible opening for fixing a motor vehicle roof bar and being of the type comprising a trap (3, 53, 63) mounted mobile on a name plate (1) of said roof comprising said opening (2) so as to take up a position for freeing or closing from said opening, said trap (3, 53, 63) being mounted pivoting around a spindle (12), **characterised in that** the spindle (12) is approximately orthogonal to said name plate (1) and to said roof, and **in that** the trap (3, 53, 63) is provided with a pivot (7) comprising a shoulder (8) or similar element cooperating with fixed elastic means (4) both on rotation and in translation so as to press said trap against said name plate.

2. Cover system according to claim 1, **characterised in that** the elastic means (4) are constituted by a spring having the shape of an arched fork and being elastically ductile and in which the extremity of the branches (5) is applied by pressure under the name plate and having a portion (6) linking said branches being engaged under said name plate.

3. Cover system according to one of claims 1 or 2, **characterised in that** said name plate (1) comprises also an opening (10) for the passage of said pivot (7) of the trap and a notch (11) to hold the portion (6) linking said branches (5).

4. Cover system according to one of claims 1 to 3, **characterised in that** the trap (53) has a convex shape fitting on the name plate (51) having a corresponding convexity.

5. Cover system according to one of claims 1 to 4, **characterised in that** the trap (63) has a concave shape fitting on a name plate having a corresponding concavity.

6. Cover system according to claims 1 to 5, **characterised in that** the trap is housed in a hollow shape (16) embodied in the name plate.

7. Cover system according to claims 1 to 6, **characterised in that** the trap (3, 53, 63) comprises manual activation means for making it pivot between the freeing and closing positions of said opening (2).

8. Cover system according to claim 7, **characterised in that** said activation means consist of a groove (9) embodied on the external face of said trap.
